# EUROPÄISCHE PATENTSCHRIFT

(11) **EP 3 084 904 B1**
(45) Veröffentlichungstag und Bekanntmachung des Hinweises auf die Patenterteilung: **10.06.2020**
(21) Anmeldenummer: 14808901.4
(22) Anmeldetag: 28.11.2014
(51) Int. Cl.: H02G 3/22, G02B 6/44, H02G 15/013

(54) **DICHTMODUL**
SEALING MODULE
MODULE D'ÉTANCHÉITÉ

(30) Priorität: 19.12.2013 DE 102013114533
(43) Veröffentlichungstag der Anmeldung: 26.10.2016
(73) Patentinhaber: Reichle & De-Massari AG, 8620 Wetzikon (CH)
(72) Erfinder: KEISER, Michael, CH-8610 Uster (CH); DI DOMENICO, Maurizio, CH-8306 Brüttisellen (CH)
(74) Vertreter: Daub, Thomas
(86) Internationale Anmeldenummer: PCT/EP2014/075955
(87) Internationale Veröffentlichungsnummer: WO 2015/090907

(56) Entgegenhaltungen:
- EP-A2- 0 408 967
- DE-A1-102008 061 185
- DE-U1-202006 006 019
- JP-A- 2000 166 060
- US-A1- 2010 034 507

## Beschreibung

Die Erfindung betrifft ein Dichtmodul zu einer Aufnahme und insbesondere zu einer Abdichtung eines oder mehrerer Kabel nach dem Oberbegriff des Anspruchs 1.

Dichtmodule zu einer Aufnahme von Kabeln mit einer Runden Ausnehmung, durch die ein oder mehrere Kabel geführt werden können, sind bereits bekannt. Ihre Verwendung ist insbesondere im Zusammenhang mit einem Witterungsschutz, insbesondere mit einer Haubenmuffe, sinnvoll.

Aus der EP 0 408 967 A2 ist zudem ein in Querrichtung in mehr als zwei Segmente geteilter Dichtkörper für längsgeteilte Kabelgarnituren bekannt, welcher mehrere Kabel zumindest abschnittsweise zumindest im Wesentlichen komplett in Umfangsrichtung umschließt.

Ferner ist aus der JP 2000166060 A ein Dichtmodul bekannt, welches dazu vorgesehen ist, mehrere Kabel in Umfangsrichtung zu umschließen und, welches an beiden Enden in konzentrischen Kreisen angeordnete Aufnahmevorrichtungen aufweist, die dazu vorgesehen sind, zumindest eines der Kabel aufzunehmen.

Darüber hinaus ist aus der US 2010/034507 A1 ein kranzförmig ausgebildetes Dichtmodul bekannt, welches dazu vorgesehen ist, mehrere Kabel aufzunehmen und zumindest abschnittsweise zumindest im Wesentlichen komplett in Umfangsrichtung zu umschließen.

Des Weiteren ist aus der DE 10 2008 061 185 A1 ein Kabeldurchführungselement zum abgedichteten Durchführen von mehreren Einzelkabeln von einem Nassbereich in einen Trockenbereich in einem Kraftfahrzeug bekannt, welches ein Einsatzteil sowie ein darin angeordnetes Formteil aufweist, das zur Trennung der Einzelkabel in mehrere Ebenen vorgesehen ist. Ferner ist aus der DE 20 2006 006 019 U1 ein Dichtungskörper einer Kabelmuffe mit mehreren Dichtungskörpersegmenten bekannt, die über Verbindungselemente miteinander verbindbar sind, wobei zwischen aneinandergrenzenden Dichtungskörpersegmenten Kabeleinführungsöffnungen ausgebildet sind, und wobei im Bereich der Kabeleinführungsöffnungen gelartige Dichtungselemente angeordnet sind, die unter Abdichtung von in die Kabeleinführungsöffnungen einlegbaren Kabeln komprimierbar sind, wobei ein mittleres, zylinderartiges Dichtungskörpersegment an einer äußeren Mantelfläche über den Umfang derselben verteilt mehrere Ausnehmungen aufweist und in jede der Ausnehmungen des mittleren Dichtungskörpersegments jeweils ein zylindersegmentartiges Dichtungskörpersegment einführbar ist und wobei zwischen dem mittleren Dichtungskörpersegment und jedem zylindersegmentartigen Dichtungskörpersegment jeweils eine Kabeleinführungsöffnung zur Aufnahme und individuellen Abdichtung jeweils eines einzigen Kabels ausgebildet ist.

Die Aufgabe der Erfindung besteht insbesondere darin, ein gattungsgemäßes Dichtmodul mit verbesserten Eigenschaften hinsichtlich einer Montage von länglichen Körpern in dem Dichtmodul bereitzustellen. Die Aufgabe wird erfindungsgemäß durch die Merkmale des Patentanspruchs 1 und des Systemanspruchs 15 gelöst, während vorteilhafte Ausgestaltungen und Weiterbildungen der Erfindung den Unteransprüchen entnommen werden können.

### Vorteile der Erfindung

Es wird ein Dichtmodul, insbesondere ein Kabelkontaktierungswitterungsschutzdichtmodul, vorgeschlagen, das dazu vorgesehen ist, mehrere längliche Körper, insbesondere mehrere Kabel, zumindest teilweise aufzunehmen und zumindest abschnittsweise zumindest im Wesentlichen komplett in Umfangsrichtung zu umschließen, mit einer Dichtmoduleinheit, die zumindest acht Aufnahmebereiche umfasst, die dazu vorgesehen sind, jeweils zumindest einen der länglichen Körper aufzunehmen und die in zumindest zwei reihenförmig angeordneten Gruppen mit jeweils zumindest vier der zumindest acht Aufnahmebereiche angeordnet sind.

Unter "vorgesehen" soll insbesondere speziell ausgestaltet, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "länglichen Körper" soll insbesondere ein Köper verstanden werden, der eine Länge aufweist, die zumindest doppelt, vorteilhaft zumindest viermal und vorzugsweise zumindest achtmal so groß ist wie dessen Durchmesser, der insbesondere quer zur Länge gemessen ist. Insbesondere sind Ausgestaltungen des länglichen Körpers als Rohr, insbesondere als Einblasrohr, als Schlauch, als Kabel, insbesondere als Glasfaserkabel, und/oder als Blindstopfen denkbar.

Unter "abschnittsweise" soll in diesem Zusammenhang insbesondere verstanden werden, dass der längliche Körper, in einer Längsrichtung des länglichen Körpers betrachtet, entlang eines Teils der gesamten Erstreckung des länglichen Körpers umschlossen ist. Unter "zumindest im Wesentlichen komplett umschlossen" soll in diesem Zusammenhang insbesondere verstanden werden, dass die Dichtmoduleinheit die länglichen Körper in zumindest einer Ebene über einen Winkelbereich von insbesondere zumindest 270 °, vorzugsweise zumindest 300 °, bevorzugt zumindest 330 ° und besonders bevorzugt von 360 ° umgibt. In einem besonders bevorzugten Ausführungsbeispiel liegt die Dichteinheit in einem montierten Zustand zumindest teilweise über zumindest nahezu einen kompletten Umfang des länglichen Körpers direkt an dem länglichen Körper an.

Die Dichtmoduleinheit ist vorzugsweise dazu vorgesehen, die länglichen Körper entlang einer Länge, die insbesondere zumindest gleich groß, vorzugsweise zumindest doppelt so groß und besonders bevorzugt zumindest dreimal so groß wie ein Durchmesser des länglichen Körpers ausgebildet ist und/oder die insbesondere zumindest 2 cm, bevorzugt zumindest 3,5 cm und vorzugsweise zumindest 5 cm beträgt und/oder die insbesondere maximal 10 cm, vorzugsweise maximal 8 cm und besonders bevorzugt maximal 6 cm beträgt. Die Dichtmoduleinheit ist vorzugsweise dazu vorgesehen, die länglichen Körper zumindest in Längsrichtung der länglichen Körper zumindest teilweise, vorzugsweise zumindest zu einem Großteil und besonders bevorzugt vollständig abzudichten und insbesondere ein Eindringen von Wasser und/oder Feuchtigkeit zumindest teilweise, vorzugsweise zumindest zu einem Großteil und besonders bevorzugt vollständig zu verhindern.

Unter "reihenförmig angeordnet" soll in diesem Zusammenhang insbesondere verstanden werden, dass die Aufnahmebereiche, insbesondere senkrecht zur Längserstreckung der länglichen Körper in den Aufnahmebereichen betrachtet, entlang einer Linie nebeneinander angeordnet sind. Die Gruppen sind insbesondere linienförmig, lagenförmig und/oder schalenförmig angeordnet. Es sind auch andere, einem Fachmann als sinnvoll erscheinende Anordnungen der Aufnahmebereiche in den zumindest zwei Gruppen denkbar. Unter einer "Gruppe" sollen in diesem Zusammenhang insbesondere mehrere Aufnahmebereiche verstanden werden, die unmittelbar nebeneinanderliegend angeordnet sind. Insbesondere sollen zumindest zwei Aufnahmebereiche zu einer gemeinsamen Gruppe gezählt werden, die einen kleinsten Abstand relativ zu weiteren benachbarten Aufnahmebereichen aufweisen.

Durch eine solche Ausgestaltung des Dichtmoduls kann eine bevorzugt gut sortierte Anordnung und eine vorteilhaft zuverlässige Abdichtung der länglichen Körper in einem durch die Dichtmoduleinheit montierten Zustand erreicht werden.

Ferner wird vorgeschlagen, dass die länglichen Körper in einer Montagerichtung in die Aufnahmebereiche der Dichtmoduleinheit einsetzbar sind, die sich jeweils senkrecht zu einer Längsrichtung der länglichen Körper erstreckt. Unter einer "Montagerichtung" soll in diesem Zusammenhang insbesondere eine Richtung verstanden werden, entlang der die länglichen Körper in die Aufnahmebereiche der Dichtmoduleinheit einsetzbar sind. Unter einer "Längsrichtung der länglichen Körper" soll in diesem Zusammenhang insbesondere eine Haupterstreckungsrichtung der länglichen Körper jeweils in einem in der Dichtmoduleinheit eingesetzten Zustand in einem Bereich, der zumindest teilweise von der Dichtmoduleinheit umschlossen ist, verstanden werden. Dadurch kann eine bevorzugt einfache, zeitsparende und bedienerfreundliche Montage der länglichen Körper erreicht werden.

In einer weiteren Ausgestaltung der Erfindung wird vorgeschlagen, dass die Dichtmoduleinheit zumindest zweiteilig ausgebildet ist und zumindest eine erste Dichteinheit und zumindest eine zweite Dichteinheit umfasst. Unter "zweitteilig" soll in diesem Zusammenhang insbesondere verstanden werden, dass die Dichtmoduleinheit zumindest zwei getrennt ausgebildete Bauteile, insbesondere Hauptkomponenten, umfasst, die vorzugsweise korrespondierend und insbesondere miteinander koppelbar ausgebildet sind. Dadurch kann eine vorteilhaft flexible Ausgestaltung der Dichtmoduleinheit erreicht werden.

Zudem wird vorgeschlagen, dass die zumindest eine erste Dichteinheit und die zumindest eine zweite Dichteinheit jeweils zumindest eine der zumindest zwei reihenförmig angeordneten Gruppen umfassen. Dadurch kann eine bevorzugte Aufteilung der länglichen Körper auf die zumindest eine erste Dichteinheit und die zumindest eine zweite Dichteinheit erreicht werden.

Des Weiteren wird vorgeschlagen, dass die zumindest eine erste Dichteinheit und die zumindest eine zweite Dichteinheit, insbesondere formschlüssig, miteinander koppelbar ausgebildet sind. Unter "formschlüssig" soll in diesem Zusammenhang insbesondere verstanden werden, dass aneinanderliegende Flächen von miteinander formschlüssig verbundenen Bauteilen der zumindest einen ersten Dichteinheit und der zumindest einen zweiten Dichteinheit eine in Normalenrichtung der Flächen wirkende Haltekraft aufeinander ausüben. Insbesondere befinden sich die miteinander formschlüssig verbundenen Bauteile der zumindest einen ersten Dichteinheit und der zumindest einen zweiten Dichteinheit in einem geometrischen Eingriff miteinander. Alternativ oder zusätzlich ist jedoch auch eine kraftschlüssige Koppelung der zumindest einen ersten Dichteinheit und der zumindest einen zweiten Dichteinheit denkbar. Unter "miteinander koppelbar" soll in diesem Zusammenhang insbesondere verstanden werden, dass die zumindest eine erste Dichteinheit und die zumindest eine zweite Dichteinheit miteinander, insbesondere lösbar, verbindbar ausgebildet sind. Dadurch können eine konstruktiv einfache Ausgestaltung der Dichtmoduleinheit und eine bevorzugt einfache Kopplung der zumindest einen ersten Dichteinheit und der zumindest einen zweiten Dichteinheit erreicht werden.

Ferner wird vorgeschlagen, dass zumindest eine der zumindest zwei reihenförmig angeordneten Gruppen bogenförmig ausgebildet ist. Unter "bogenförmig" soll in diesem Zusammenhang insbesondere verstanden werden, dass die zumindest eine reihenförmig angeordnete Gruppe entlang einer Linie angeordnet ist, die eine Krümmung aufweist, die von null verschieden ausgebildet ist. Vorzugsweise ist die zumindest eine reihenförmig angeordnete Gruppe kreisbogenförmig ausgebildet und/oder weist einen zumindest nahezu gleichbleibenden Radius auf. Dadurch kann eine konstruktiv einfache und vorteilhaft kompakte Ausgestaltung der Gruppen der Aufnahmebereiche erreicht werden.

Zudem wird vorgeschlagen, dass die zumindest zwei reihenförmig angeordneten Gruppen zumindest im Wesentlichen parallel zueinander angeordnet sind. Unter "zumindest im Wesentlichen parallel" soll in diesem Zusammenhang insbesondere verstanden werden, dass die zumindest zwei reihenförmig angeordneten Gruppen einen Winkel einschließen, der insbesondere weniger als 10 °, vorzugsweise weniger als 8 °, bevorzugt weniger als 5 ° und besonders bevorzugt weniger als 2 ° aufweist. Dadurch kann eine vorteilhaft geordnete und systematische Anordnung der länglichen Körper in einem montierten Zustand erreicht werden.

Des Weiteren wird vorgeschlagen, dass die Dichtmoduleinheit für jeden der zumindest acht Aufnahmebereiche jeweils zumindest ein Halteelement umfasst, das zumindest zu einer formschlüssigen Befestigung jeweils eines der länglichen Körper vorgesehen ist. Unter einer "formschlüssigen Befestigung" soll insbesondere verstanden werden, dass aneinanderliegende Flächen des zumindest einen länglichen Körpers und des zumindest einen Halteelements eine in Normalenrichtung der Flächen wirkende Haltekraft aufeinander ausüben. Insbesondere befinden sich die miteinander formschlüssig verbundenen länglichen Körper und das zumindest eine Halteelement in einem geometrischen Eingriff miteinander. Alternativ oder zusätzlich ist jedoch auch eine kraftschlüssige Koppelung des zumindest einen länglichen Körpers und des zumindest einen Halteelements denkbar. Dadurch kann eine vorteilhaft einfache Befestigung des zumindest einen länglichen Körpers erreicht werden.

Die Dichtmoduleinheit umfasst zumindest zwei Schalungselemente und zumindest ein Dichtungselement. Die zumindest zwei Schalungselemente sind vorzugsweise fest, insbesondere stoffschlüssig, mit dem zumindest einen Dichtungselement verbunden. Bevorzugt fassen die zumindest zwei Schalungselemente das zumindest eine Dichtungselement auf zwei sich gegenüberliegenden Seiten des Dichtungselements ein. Dadurch kann eine vorteilhaft kompakte und bevorzugt stabile Ausgestaltung der Dichtmoduleinheit erreicht werden.

Ferner wird vorgeschlagen, dass die zumindest eine erste Dichteinheit und die zumindest eine zweite Dichteinheit jeweils zumindest zwei Schalungselemente und zumindest ein Dichtungselement umfassen. Dadurch kann eine vorteilhaft kompakte und bevorzugt stabile Ausgestaltung der Dichteinheiten erreicht werden.

Des Weiteren wird vorgeschlagen, dass die zumindest eine erste Dichteinheit und/oder die zumindest eine zweite Dichteinheit genau ein einstückig ausgebildetes Dichtungselement umfassen/umfasst, das dazu vorgesehen ist, die länglichen Körper zumindest abschnittsweise zumindest im Wesentlichen komplett in Umfangsrichtung zu umschließen. Unter "einstückig" soll insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "zumindest im Wesentlichen komplett umschließen" soll in diesem Zusammenhang insbesondere verstanden werden, dass das Dichtungselement die länglichen Körper auf zumindest einer Ebene über einen Winkelbereich von insbesondere zumindest 180 °, vorzugsweise zumindest 270 ° und besonders bevorzugt von 360 ° umgibt. Dadurch kann eine bevorzugt zuverlässige Befestigung und eine vorteilhaft gute Abdichtung der länglichen Körper in einem montierten Zustand im Bereich des Dichtungselements erreicht werden.

Zudem wird vorgeschlagen, dass die zumindest zwei Schalungselemente und/oder das zumindest eine Dichtungselement die zumindest acht Aufnahmebereiche zumindest teilweise aufweisen/aufweist. Dadurch kann eine vorteilhaft gute und zuverlässige Befestigung der länglichen Körper in einem montierten Zustand erreicht werden.

Des Weiteren wird vorgeschlagen, dass zumindest eines der zumindest zwei Schalungselemente und/oder das zumindest eine Dichtungselement aufklappbar ausgebildet sind/ist. Unter "aufklappbar" soll in diesem Zusammenhang insbesondere verstanden werden, dass das zumindest eine Dichtungselement zumindest zwei Bereiche aufweist, die in einem zusammengeklappten Zustand als Lagen aufeinanderliegen und die an einer Seite miteinander verbunden ausgebildet sind. Dadurch kann eine vorteilhaft einfache Handhabung der Dichtmoduleinheit und Montage der länglichen Elemente erreicht werden.

Das zumindest eine Dichtungselement ist zumindest teilweise entlang zumindest einer der zumindest zwei reihenförmig angeordneten Gruppen aufklappbar ausgebildet. Ferner wird vorgeschlagen, dass zumindest eines der zumindest zwei Schalungselemente zumindest teilweise entlang zumindest einer der zumindest zwei reihenförmig angeordneten Gruppen aufklappbar ausgebildet sind/ist. Dadurch kann eine vorteilhaft einfache Handhabung der Dichtmoduleinheit und Montage der länglichen Elemente erreicht werden.

Zudem wird vorgeschlagen, dass die zumindest eine Dichtmoduleinheit zumindest teilweise kreisringsektorförmig ausgebildet ist. Dadurch kann eine konstruktiv einfache und vorteilhaft einheitliche Ausgestaltung des Dichtmoduls erreicht werden. In einem besonders bevorzugten Ausführungsbeispiel weist das Dichtmodul zumindest nahezu eine gleiche Kontur auf, wie bereits bekannte Dichtmodule.

Des Weiteren wird ein Kabelkontaktierungswitterungsschutz mit zumindest einem Dichtmodul vorgeschlagen. Der Kabelkontaktierungswitterungsschutz weist insbesondere zumindest zwei, vorzugsweise zumindest vier, vorteilhaft zumindest sechs und vorzugsweise zumindest acht separate, unabhängig voneinander austauschbare Dichtmodule auf, die jeweils dazu vorgesehen sind, in zumindest einem Anwendungszustand zumindest einen länglichen Körper wenigstens abschnittsweise in Längsrichtung und komplett in Umfangsrichtung zu umschließen. Unter einem "Kabelkontaktierungswitterungsschutz" soll insbesondere eine Vorrichtung verstanden werden, die dazu vorgesehen ist, eine Kontaktierungsanordnung zur Verbindung von Kabeln, insbesondere von Glasfaserkabeln, und/oder zur Halterung von Verbindungsstellen zwischen Kabeln, insbesondere Glasfaserkabeln, witterungsgeschützt aufzunehmen und/oder zu bilden. Insbesondere ist der Kabelkontaktierungswitterungsschutz dazu vorgesehen, in ungeschützten Umgebungen, insbesondere im Freien, im Boden, in Montageschächten, an Kabelmasten, und/oder vergleichbaren Orten eingesetzt zu werden. Insbesondere schützt der Kabelkontaktierungswitterungsschutz Kabelkontaktierungsstellen zumindest vor Feuchtigkeit, insbesondere bei einem Volllaufen eines Kabel- und/oder Montageschachts. Insbesondere weist der Kabelkontaktierungswitterungsschutz zumindest eine Ummantelungseinheit auf, die dazu vorgesehen ist, einen Hohlraum zu bilden, in dem die Kabelkontaktierungsstellen zumindest in einem montierten Zustand angeordnet sind.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Kabelkontaktierungswitterungsschutz in einer Außenansicht in geschlossenem Zustand,
- Fig. 2: eine perspektivische Ansicht einer teilweise zerlegten Kabeldurchführungsdichteinheit des Kabelkontaktierungswitterungsschutzes mit mehreren eingesetzten Dichtmodulen,
- Fig. 3: eine perspektivische Ansicht eines Dichtmoduls mit einer ersten Dichteinheit und mit einer zweiten Dichteinheit in einem geöffneten und unmontierten Zustand,
- Fig. 4: eine perspektivische Ansicht des Dichtmoduls mit der ersten Dichteinheit und mit der zweiten Dichteinheit in einem geschlossenen und montagebereiten Zustand,
- Fig. 5: einen Ausschnitt der ersten Dichteinheiten des Dichtmoduls in einer perspektivischen Ansicht,
- Fig. 6: einen weiteren Ausschnitt der ersten Dichteinheiten des Dichtmoduls in einer perspektivischen Ansicht und
- Fig. 7: einen Ausschnitt einer der Dichteinheiten des Dichtmoduls mit mehreren aufgenommenen und befestigten länglichen Körpern in einer perspektivischen Ansicht.

### Beschreibung des Ausführungsbeispiels

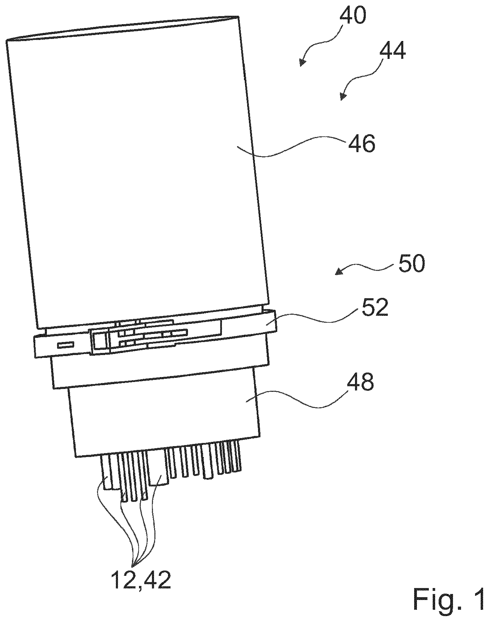

Die Figur 1 zeigt einen Kabelkontaktierungswitterungsschutz 40 zur Aufnahme von nicht näher dargestellten Kabelkontaktierungsstellen, an denen längliche Körper 12 miteinander verbunden sind. Die länglichen Körper 12 sind als Kabel 42 ausgebildet. Der Kabelkontaktierungswitterungsschutz 40 entspricht einem Kabelkontaktierungswitterungsschutz, der beispielsweise in der noch nicht veröffentlichten DE 10 2012 112 510.4 offenbart ist. Die Kabel 42 sind zumindest teilweise von Glasfaserkabeln gebildet. Die Kabel 42 sind von Glasfaserkabeln gebildet. Der Kabelkontaktierungswitterungsschutz 40 ist als Haubenmuffe ausgebildet. Der Kabelkontaktierungswitterungsschutz 40 weist eine Ummantelungseinheit 44 auf. Die Ummantelungseinheit 44 weist ein im Wesentlichen zylindrisches Deckteil 46 und ein abgestuft zylindrisches Grundteil 48 auf. Die Ummantelungseinheit 44 weist weiterhin eine Abdichtungseinheit 50 auf, die dazu vorgesehen ist, das Deckteil 46 und das Grundteil 48 mittels eines Spannrings 52 miteinander zu verbinden und mittels eines nicht dargestellten Dichtrings abzudichten. Die Ummantelungseinheit 44 bildet einen Hohlraum. In dem Hohlraum verbundene Kabel 42 sind durch eine untere Öffnung des Grundteils 48 geführt.

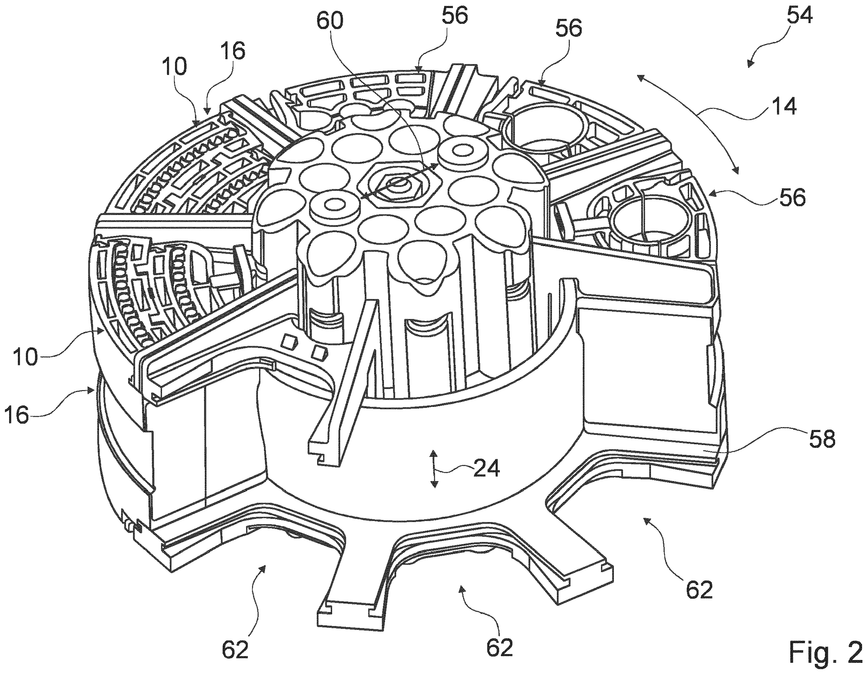

Der Kabelkontaktierungswitterungsschutz 40 weist eine Kabeldurchführungsdichteinheit 54 auf, die in einem von dem Grundteil 48 umfassten Raum angeordnet ist (Figur 2). Die Kabeldurchführungsdichteinheit 54 weist acht separate, unabhängig voneinander austauschbare Dichtmodule 10, 56 auf. Die Dichtmodule 10, 56 können gegen andere Dichtmodule gleicher oder anderer Bauart, insbesondere zur Anpassung an unterschiedliche Kabelkonfigurationen mit insbesondere unterschiedlichen Kabelanzahlen und/oder Kabeldurchmessern, ausgetauscht werden. Auf eine doppelte Bezeichnung von sich wiederholenden Bestandteilen wurde im Wesentlichen verzichtet, um eine bessere Übersichtlichkeit zu wahren. Ferner sind in Figur 2 nicht alle Dichtmodule 10, 56 dargestellt. Die Dichtmodule 10, 56 sind in einen Dichtmodulträger 58 eingesetzt. Der Dichtmodulträger 58 ist sternenförmig ausgebildet. Die Dichtmodule 10, 56 sind lösbar mit dem Dichtmodulträger 58 koppelbar. Die Dichtmodule 10, 56 sind werkzeuglos oder unter Zuhilfenahme einfachster Werkzeuge, wie beispielsweise eines Schraubendrehers, an dem Dichtmodulträger 58 montierbar ausgebildet. Die Dichtmodule 10, 56 werden bei einer Montage in Radialrichtung 60 des Dichtmodulträgers 58 in dafür vorgesehene Ausnehmungen 62 des Dichtmodulträgers 58 eingeschoben. Der Dichtmodulträger 58 ist mit unterschiedlich ausgestalteten Dichtmodulen 10, 56 bestückbar.

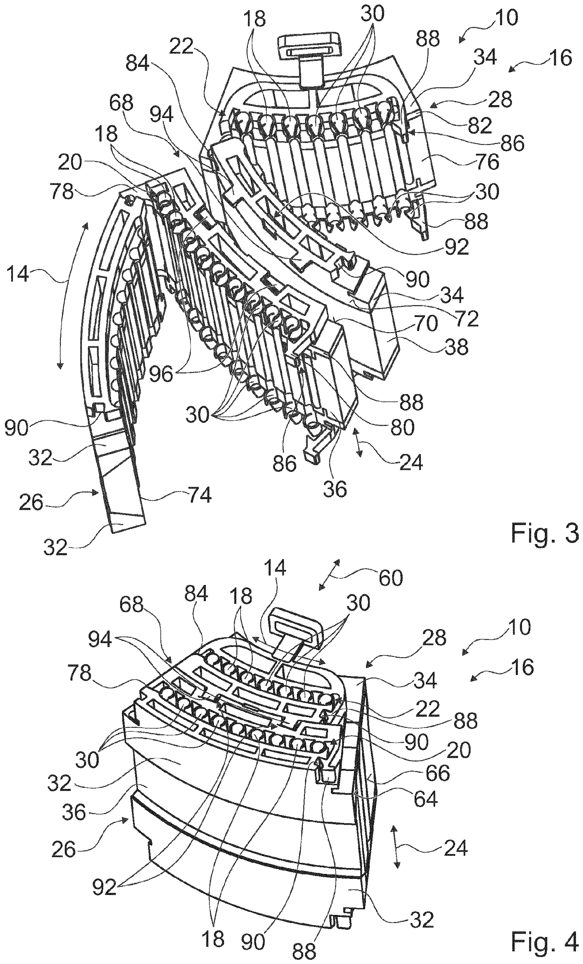

In den Figuren 3 bis 7 ist eine Ausgestaltung eines der Dichtmodule 10, 56 näher dargestellt und wird im Folgenden erläutert.

Das Dichtmodul 10 ist in Figur 3 in einem geöffneten, unmontierten Zustand dargestellt. Das Dichtmodul 10 ist als Kabelkontaktierungswitterungsschutzdichtmodul ausgebildet. Das Dichtmodul 10 ist dazu vorgesehen, mehrere längliche Körper 12 zumindest teilweise aufzunehmen und zumindest abschnittsweise zumindest im Wesentlichen komplett in Umfangsrichtung 14 zu umschließen. Das Dichtmodul 10 ist dazu vorgesehen, mehrere längliche Körper 12 aufzunehmen und abschnittsweise in Umfangsrichtung 14 zu umschließen. Die Umfangsrichtung 14 verläuft parallel zu zwei Kreisbogen, die die Dichtmoduleinheit 16 begrenzen. Die länglichen Körper 12 sind als Kabel 42 ausgebildet. Die länglichen Körper 42 sind als Glasfaserkabel ausgebildet. Es ist jedoch auch denkbar, dass zumindest ein Teil der länglichen Körper 12 als Schläuche oder auf eine andere, einem Fachmann als sinnvoll erscheinende Weise ausgebildet sind. Jedes der länglichen Körper 12 weist einen Durchmesser zwischen 3 mm und 5 mm auf. Es sind jedoch auch andere, einem Fachmann als sinnvoll erscheinende Durchmesser denkbar.

Das Dichtmodul 10 umfasst die Dichtmoduleinheit 16, die zumindest acht Aufnahmebereiche 18 umfasst. Die Dichtmoduleinheit 16 umfasst insgesamt achtzehn Aufnahmebereiche 18. Die Aufnahmebereiche 18 sind dazu vorgesehen, jeweils zumindest einen der länglichen Körper 12 aufzunehmen. Die Aufnahmebereiche 18 sind dazu vorgesehen, jeweils einen der länglichen Körper 18 aufzunehmen. Die Aufnahmebereiche 18 sind in zumindest zwei reihenförmig angeordneten Gruppen 20, 22 mit jeweils zumindest vier der zumindest acht Aufnahmebereiche 18 angeordnet. Die Aufnahmebereiche 18 sind in zwei reihenförmig angeordneten Gruppen 20, 22 angeordnet. Jede der Gruppen 20, 22 weist jeweils neun Aufnahmebereiche 18 auf. Die Aufnahmebereiche 18 weisen eine längliche Form auf. Die Aufnahmebereiche 18 sind rinnenförmig ausgebildet. Die Dichtmoduleinheit 16 ist zumindest zweiteilig ausgebildet und umfasst zumindest eine erste Dichteinheit 26 und zumindest eine zweite Dichteinheit 28. Die Dichtmoduleinheit 16 ist zweiteilig ausgebildet und umfasst eine erste Dichteinheit 26 und eine zweite Dichteinheit 28. Die erste Dichteinheit 26 und die zweite Dichteinheit 28 sind miteinander koppelbar ausgebildet. Die erste Dichteinheit 26 und die zweite Dichteinheit 28 umfassen jeweils eine der zwei reihenförmig angeordneten Gruppen 20, 22 der Aufnahmebereiche 18. Die erste Dichteinheit 26 umfasst die reihenförmig angeordnete Gruppe 20. Die zweite Dichteinheit 28 umfasst die reihenförmig angeordnete Gruppe 22. Zumindest eine der zwei reihenförmig angeordneten Gruppen 20, 22 der Aufnahmebereiche 18 ist zumindest im Wesentlichen bogenförmig ausgebildet. Die reihenförmig angeordneten Gruppen 20, 22 der Aufnahmebereiche 18 sind zumindest im Wesentlichen bogenförmig ausgebildet. Die reihenförmig angeordneten Gruppen 20, 22 sind parallel zueinander angeordnet.

Die Dichtmoduleinheit 16 ist zumindest teilweise kreisringsektorförmig ausgebildet. Die Dichtmoduleinheit 16 ist kreisringsektorförmig ausgebildet. Die Dichtmoduleinheit 16 erstreckt sich über einen Winkel von 45 °. Die Dichtmodule 10, 56 sind kreisringsektorförmig ausgebildet. In einem in dem Dichtmodulträger 58 montierten bzw. eingebauten Zustand von acht kreisringsektorförmigen Dichtmodulen 10, 56 ergänzen sich diese zu einem kompletten Kreisring. Die erste Dichteinheit 26 und die zweite Dichteinheit 28 sind jeweils kreisringsektorförmig ausgebildet. Die erste Dichteinheit 26 und die zweite Dichteinheit 28 sind in Radialrichtung 60 nacheinander angeordnet. Die Radialrichtung 60 der Dichtmoduleinheit 16 entspricht einer Radialrichtung der Kreisbogen, die die Dichtmoduleinheit 16 begrenzen. Die Radialrichtung 60 der Dichtmoduleinheit 16 entspricht der Radialrichtung 60 des Dichtmodulträgers 58 des Kabelkontaktierungswitterungsschutzes 40. Die erste Dichteinheit 26 ist in Radialrichtung 60 nach der zweiten Dichteinheit 28 angeordnet. Die erste Dichteinheit 26 und die zweite Dichteinheit 28 weisen in Radialrichtung 60 eine gleiche Materialstärke bzw. Materialerstreckung auf. In Umfangsrichtung 14 angeordnete Seitenflächen 64, 66 der ersten Dichteinheit 26 und der zweiten Dichteinheit 28 sind als Sektorgrenzseiten 68 des Dichtmoduls 10 ausgebildet. Die Seitenflächen 64 der ersten Dichtungseinheit 26 schließen in einem gekoppelten Zustand mit der zweiten Dichtungseinheit 28 bündig mit in Umfangsrichtung 14 angeordneten Seitenflächen 66 der zweiten Dichtungseinheit 26 ab. Eine, in Radialrichtung 60 betrachtet, innere Außenfläche 70 der ersten Dichteinheit 26 und eine, in Radialrichtung 60 betrachtet, äußere Außenfläche 72 der zweiten Dichteinheit 28 weisen dieselbe Krümmung auf.

Die Dichtmoduleinheit 16 umfasst zumindest zwei Schalungselemente 32, 34 und zumindest ein Dichtungselement 36, 38. Die Dichtmoduleinheit 16 weist vier Schalungselemente 32, 34 und zwei Dichtungselemente 36, 38 auf. Die erste Dichteinheit 26 und die zweite Dichteinheit 28 umfassen jeweils zumindest zwei Schalungselemente 32, 34 und zumindest ein Dichtungselement 36, 38. Die erste Dichteinheit 26 und die zweite Dichteinheit 28 umfassen jeweils zwei Schalungselemente 32, 34 und ein Dichtungselement 36, 38. Die erste Dichteinheit 26 umfasst die zwei Schalungselemente 32 und das Dichtungselement 36. Die zweite Dichteinheit 28 umfasst die zwei Schalungselemente 34 und das Dichtungselement 38.

Das Dichtungselement 36, 38 ist aus einem Gel gebildet. Das Dichtungselement 36, 38 ist elastisch verformbar ausgebildet. Das Dichtungselement 36, 38 ist dazu vorgesehen, die länglichen Körper 12 in einem montierten Zustand zu umschließen, in Umfangsrichtung 14 des länglichen Körpers 12 abschnittsweise vollständig zu kontaktieren und dadurch den länglichen Körper 12 entlang dessen Längsrichtung 24 über die Erstreckung des Dichtungselements 36, 38, senkrecht zur Umfangsrichtung 14 und senkrecht zur Radialrichtung 60 betrachtet, wasserdicht abzuschließen bzw. abzudichten. Das Dichtungselement 36, 38 weist die Aufnahmebereiche 18 zumindest teilweise auf. Das Dichtungselement 36, 38 weist jeweils einen Teil der Aufnahmebereiche 18 auf. Das Dichtungselement 36 der ersten Dichteinheit 26 weist jeweils einen Teil der Aufnahmebereiche 18 der reihenförmig angeordneten Gruppe 20 auf und das Dichtungselement 38 der zweiten Dichteinheit 28 weist jeweils einen Teil der Aufnahmebereiche 18 der anderen reihenförmig angeordneten Gruppe 22 auf. Die erste Dichteinheit 26 umfasst genau ein einstückig ausgebildetes Dichtungselement 36, das dazu vorgesehen ist, die länglichen Körper 12 zumindest abschnittsweise zumindest im Wesentlichen komplett in Umfangsrichtung 14 zu umschließen. Die erste Dichteinheit 26 umfasst genau ein einstückig ausgebildetes Dichtungselement 36, das dazu vorgesehen ist, die länglichen Körper 12 abschnittsweise entlang einer Erstreckung des Dichtungselements 36, senkrecht zur Umfangsrichtung 14 und senkrecht zur Radialrichtung 60 betrachtet, komplett in Umfangsrichtung 14 zu umschließen. Die zweite Dichteinheit 28 umfasst genau ein einstückig ausgebildetes Dichtungselement 38, das dazu vorgesehen ist, die länglichen Körper 12 zumindest abschnittsweise zumindest im Wesentlichen komplett in Umfangsrichtung 14 zu umschließen. Die zweite Dichteinheit 28 umfasst genau ein einstückig ausgebildetes Dichtungselement 38, das dazu vorgesehen ist, die länglichen Körper 12 abschnittsweise entlang einer Erstreckung des Dichtungselements 38, senkrecht zur Umfangsrichtung 14 und senkrecht zur Radialrichtung 60 betrachtet, komplett in Umfangsrichtung 14 zu umschließen.

Senkrecht zur Umfangsrichtung 14 und senkrecht zur Radialrichtung 60 betrachtet, schließen sich an das Dichtungselement 36, 38 die Schalungselemente 32, 34 an. Die Schalungselemente 32, 34 schließen sich, senkrecht zur Umfangsrichtung 14 und senkrecht zur Radialrichtung 60 betrachtet, an sich gegenüberliegenden Enden des Dichtungselements 36, 38 an. Die Schalungselemente 32, 34 sind jeweils stoffschlüssig mit dem Dichtungselement 36, 38 verbunden. Die Schalungselemente 32 sind stoffschlüssig mit dem Dichtungselement 36 verbunden. Die Schalungselemente 34 sind stoffschlüssig mit dem Dichtungselement 38 verbunden. Die erste Dichteinheit 26 umfasst die Schalungselemente 32. Die zweite Dichteinheit 28 umfasst die Schalungselemente 34. Die Schalungselemente 32, 34 sind von einem festen Kunststoff, beispielsweise Polyethylen, gebildet. Die Schalungselemente 32, 34 überdecken eine Querschnittsfläche der Enden des Dichtungselements 36, 38 vollständig. Senkrecht zur Umfangsrichtung 14 und senkrecht zur Radialrichtung 60 betrachtet, umschließen die Schalungselemente 32, 34 das Dichtungselement 36, 38. Die Schalungselemente 32, 34 weisen die Aufnahmebereiche 18 zumindest teilweise auf. Die Schalungselemente 32, 34 weisen jeweils einen Teil der Aufnahmebereiche 18 auf. Die Schalungselemente 32 der ersten Dichteinheit 26 weisen jeweils einen Teil der Aufnahmebereiche 18 der reihenförmig angeordneten Gruppe 20 auf und die Schalungselemente 34 der zweiten Dichteinheit 28 weisen jeweils einen Teil der Aufnahmebereiche 18 der anderen reihenförmig angeordneten Gruppe 22 auf.

Die Dichtmoduleinheit 16 ist dazu vorgesehen, zu einer Kabelmontage aufgeklappt zu werden. Die erste Dichteinheit 26 und die zweite Dichteinheit 28 sind dazu vorgesehen, zu der Kabelmontage aufgeklappt zu werden. Das Dichtungselement 36, 38 ist aufklappbar ausgebildet. Das Dichtungselement 36, 38 ist zumindest teilweise entlang zumindest einer der reihenförmig angeordneten Gruppen 20, 22 aufklappbar ausgebildet. Das Dichtungselement 36, 38 ist entlang zumindest einer der reihenförmig angeordneten Gruppen 20, 22 aufklappbar ausgebildet. Das Dichtungselement 36, 38 ist dazu teilweise entlang einer Umfangsrichtung 14 geschlitzt ausgebildet. Ein Schlitz 74, 76 durch das Dichtungselement 36, 38 verläuft hierbei in Umfangsrichtung 14 zwischen den Sektorgrenzseiten 68 des Dichtmoduls 10. An der Stelle, an der der Schlitz 74, 76 eine der Sektorgrenzseiten 68 des Dichtmoduls 10 bzw. eine der Seitenflächen 64, 66 des Dichtungselements 36, 38 fast erreicht, bildet sich ein nicht näher dargestelltes Scharnier heraus, das ein Aufklappen des Dichtungselements 36, 38 erlaubt.

Die Schalungselemente 32, 34 sind aufklappbar ausgebildet. Die Schalungselemente 32, 34 sind zumindest teilweise entlang zumindest einer der reihenförmig angeordneten Gruppen 20, 22 aufklappbar ausgebildet. Die Schalungselemente 32, 34 sind entlang zumindest einer der reihenförmig angeordneten Gruppen 20, 22 aufklappbar ausgebildet. Die Schalungselemente 32, 34 sind dazu teilweise entlang der Umfangsrichtung 14 geschlitzt ausgebildet. Ein Schlitz 80, 82 durch die Schalungselemente 32, 34 verläuft hierbei in Umfangsrichtung 14 zwischen den Sektorgrenzseiten 68 des Dichtmoduls 10. An der Stelle, an der der Schlitz 80, 82 eine der Sektorgrenzseiten 68 des Dichtmoduls 10 bzw. eine der Seitenflächen 64, 66 jeweils eines der Schalungselemente 32, 34 fast erreicht, ist jeweils ein Scharnier 78, 84 angeordnet, das ein Aufklappen der Schalungselemente 32, 34 erlaubt. Die Scharniere 78, 84 der Schalungselemente 32, 34 sind jeweils als Filmscharnier ausgebildet. Die Scharniere 78, 84 der Schalungselemente 32, 34 sind jeweils an vergleichbarer Stelle wie das Scharnier des mit den Schalungselementen 32, 34 verbundenen Dichtungselements 36, 38 ausgebildet. Die Scharniere 78, 84 der Schalungselemente 32, 34 und des Dichtelements 38 liegen in einer Achse. Die Achse erstreckt sich senkrecht zur Umfangsrichtung 14 und zur Radialrichtung 60 des Dichtmoduls 10.

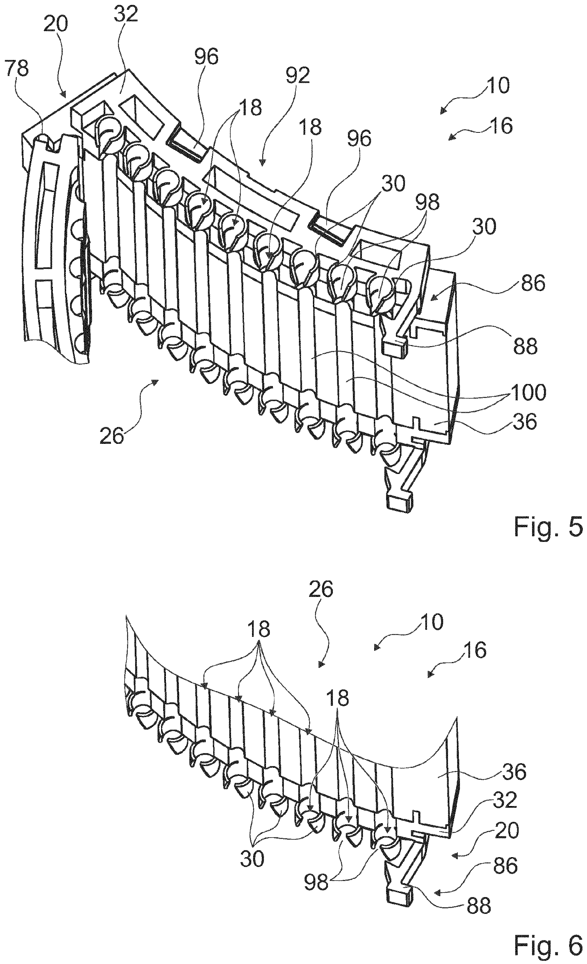

Die Schalungselemente 32, 34 weisen jeweils an einer von dem Scharnier 78, 84 abgewandten Sektorgrenzseite 68 eine Rasteinheit 86 auf, die dazu dient, ein ungewolltes Aufklappen der Schalungselemente 32, 34 sowie des mit den Schalungselementen 32, 34 verbundenen Dichtungselements 36, 38 zu vermeiden (Figuren 5 und 6). Die Rasteinheit 86 umfasst einen Rasthaken 88 und eine mit dem Rasthaken 88 korrespondierend ausgebildete Rastausnehmung 90. Die erste Dichteinheit 26 und die zweite Dichteinheit 28 weisen jeweils zwei Rasteinheiten 86 mit jeweils einem Rasthaken 88 und mit jeweils einer Rastausnehmung 90 auf. In einem geschlossenen Zustand der ersten Dichteinheit 26 und der zweiten Dichteinheit 38 greifen die Rasthaken 88 in die jeweiligen Rastausnehmungen 90 ein, verrasten miteinander und verhindern so ein ungewolltes Aufklappen der Schalungselemente 32, 34 sowie des mit den Schalungselementen 32, 34 verbundenen Dichtungselements 36, 38 (Figur 4). Die Rastverbindung der Rasteinheit 86 ist werkzeuglos lösbar ausgebildet.

Die erste Dichteinheit 26 und die zweite Dichteinheit 28 sind miteinander koppelbar ausgebildet. Die erste Dichteinheit 26 und die zweite Dichteinheit 28 sind formschlüssig miteinander koppelbar ausgebildet. Die erste Dichteinheit 26 und die zweite Dichteinheit 28 sind lösbar miteinander koppelbar. Die erste Dichteinheit 26 und die zweite Dichteinheit 28 sind werkzeuglos lösbar miteinander koppelbar. Hierzu weist die Dichtmoduleinheit 16 eine Kopplungseinheit 92 auf, die zu einer Kopplung der ersten Dichteinheit 26 und der zweiten Dichteinheit 28 vorgesehen ist. Die Kopplungseinheit 92 weist zumindest einen Verbindungshaken 94 und zumindest eine mit dem Verbindungshaken 94 korrespondierend ausgebildete Verbindungsausnehmung 96 auf. Die Kopplungseinheit 92 weist zwei Verbindungshaken 94 und zwei mit dem Verbindungshaken 94 korrespondierend ausgebildete Verbindungsausnehmungen 96 auf. Die Verbindungshaken 94 sind mit einem der Schalungselemente 34 der zweiten Dichteinheit 28 verbunden. Die Verbindungshaken 94 sind einstückig mit einem der Schalungselemente 34 der zweiten Dichteinheit 28 ausgebildet. Die Verbindungsausnehmungen 96 sind mit einem der Schalungselemente 32 der ersten Dichteinheit 26 verbunden. Die Verbindungsausnehmungen 96 sind einstückig mit einem der Schalungselemente 32 der ersten Dichteinheit 26 ausgebildet. In einem miteinander gekoppelten Zustand der ersten Dichteinheit 26 und der zweiten Dichteinheit 28 greifen die Verbindungshaken 94 jeweils in eine der Verbindungsausnehmungen 96 ein und sichern die erste Dichteinheit 26 und die zweite Dichteinheit 28 formschlüssig aneinander.

Die Dichtmoduleinheit 16 umfasst für jeden der zumindest acht Aufnahmebereiche 18 jeweils zumindest ein Halteelement 30, das zumindest zu einer formschlüssigen Befestigung jeweils eines der länglichen Körper 12 vorgesehen ist. Die Halteelemente 30 sind zu einer formschlüssigen Befestigung jeweils eines der länglichen Körper 12 vorgesehen. Jedem der Aufnahmebereiche 18 ist ein Halteelement 30 zugeordnet. Die Halteelemente 30 sind mit den Schalungselementen 32, 34 verbunden. Die Halteelemente 30 sind einstückig mit den Schalungselementen 32, 34 ausgebildet. Die länglichen Körper 12 werden in einem montierten Zustand jeweils von zwei Halteelementen 30 formschlüssig befestigt. Die beiden Halteelemente 30, die eines der länglichen Körper 12 formschlüssig befestigen, sind mit voneinander verschiedenen Schalungselementen 32, 34 einer der Dichteinheiten 26, 28 verbunden. Die Halteelemente 30 sind aus einem Kunststoff gebildet. Die Halteelemente 30 sind identisch ausgebildet. Die Halteelemente 30 sind jeweils zylindermantelförmig bzw. rohrförmig ausgebildet und weisen entlang einer Rotationsachse einen Schlitz 98 auf. Der Schlitz 98 erstreckt sich entlang einer gesamten Erstreckung des Halteelements 30 parallel zur Rotationsachse. Die Halteelemente 30 weisen einen C-förmigen Querschnitt auf. Die Halteelemente 30 weisen einen kreisringsektorförmigen Querschnitt auf. Der Schlitz 98 ist, parallel zur Rotationsachse betrachtet, verjüngend ausgebildet. Der Schlitz 98 ist, parallel zur Rotationsachse betrachtet, schmaler werdend ausgebildet. Das schmale Ende des Schlitzes 98 ist, in Längsrichtung 24 betrachtet, dem Dichtungselement 36, 38 zugewandt angeordnet. Die Rotationsachse ist senkrecht zur Umfangsrichtung 14 und senkrecht zur Radialrichtung 60 ausgebildet. Die Rotationsachse verläuft in einem montierten Zustand der länglichen Körper 12 jeweils parallel zu deren Längsrichtung 24.

Die Halteelemente 30 definieren jeweils einen Teil eines der Aufnahmebereiche 18 der Dichtmoduleinheit 16. Jeweils zwei der Halteelemente 30, die dazu vorgesehen sind, denselben länglichen Körper 12 zu befestigen, definieren jeweils einen Teil genau eines der Aufnahmebereiche 18. Das Dichtungselement 36, 38 weist Haltenuten 100 auf, die zu einer Aufnahme jeweils eines der länglichen Körper 12 vorgesehen sind. Die Haltenuten 100 sind rinnenförmig ausgebildet. Eine Längserstreckung der Haltenuten 100 verläuft parallel zur Rotationsachse der Halteelemente 30. Die Haltenuten 100 sind parallel angeordnet. Die Haltenuten 100 sind in das Dichtelement 36, 38 eingebracht. Die Haltenuten 100 erstrecken sich, senkrecht zur Umfangsrichtung 14 und senkrecht zur Radialrichtung 60 betrachtet, zwischen den sich gegenüberliegenden Halteelementen 30 der Schalungselemente 32, 34. Jeweils eine der Haltenuten 100 schließt bündig mit zwei Halteelementen 30 ab. Die Haltenuten 100 definieren jeweils einen Teil eines der Aufnahmebereiche 18 der Dichtmoduleinheit 16. Jeweils zwei der Halteelemente 30, die dazu vorgesehen sind, denselben länglichen Körper 12 zu befestigen, und eine der Haltenuten 100 definieren jeweils einen der Aufnahmebereiche 18. Die zwei Halteelemente 30 und die Haltenut 100 definieren den Aufnahmebereich 18 vollständig. Es ist jedoch auch denkbar, dass das Dichtungselement 36, 38 eine ebene Oberfläche aufweist, die zu der Aufnahme der länglichen Körper 12 vorgesehen ist, wobei sich das Dichtungselement 36, 38 in einem montierten Zustand derart verformt, dass die länglichen Körper 12 vollständig von einem Material des Dichtungselements 36, 38 umschlossen und abgedichtet sind.

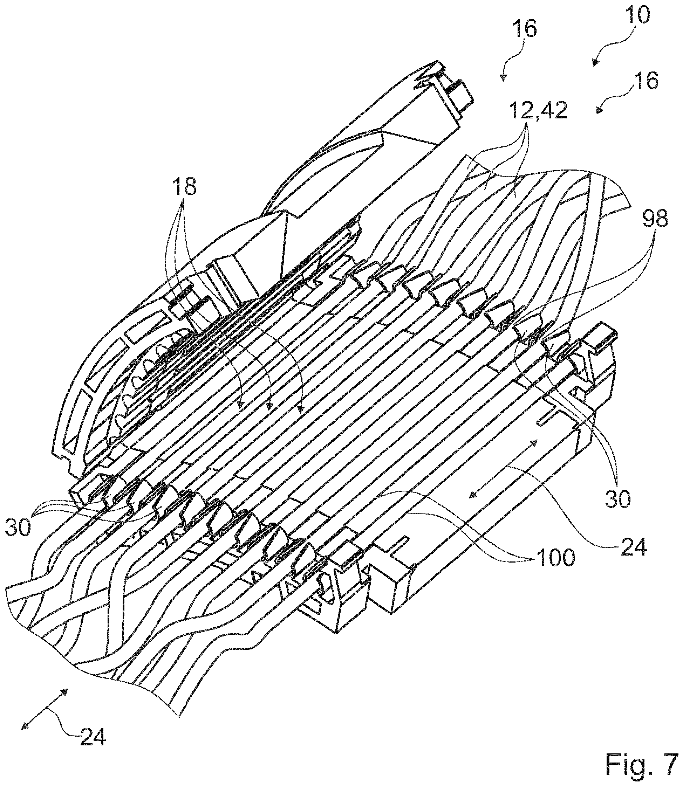

Die länglichen Körper 12 in einer Montagerichtung sind in die Aufnahmebereiche 18 der Dichtmoduleinheit 16 einsetzbar, die sich jeweils senkrecht zu einer Längsrichtung 24 der länglichen Körper 12 in einem montierten Zustand erstreckt. Zu einer Montage der länglichen Körper 12 werden die länglichen Körper 12 durch den Schlitz 98 in die Halteelemente 30 eingebracht und anschließend von den Halteelementen 30 gehalten (Figur 7).

### Bezugszeichen

- 10: Dichtmodul
- 12: länglicher Körper
- 14: Umfangsrichtung
- 16: Dichtmoduleinheit
- 18: Aufnahmebereiche
- 20: Gruppe
- 22: Gruppe
- 24: Längsrichtung
- 26: Dichteinheit
- 28: Dichteinheit
- 30: Halteelement
- 32: Schalungselement
- 34: Schalungselement
- 36: Dichtungselement
- 38: Dichtungselement
- 40: Kabelkontaktierungswitterungsschutz
- 42: Kabel
- 44: Ummantelungseinheit
- 46: Deckteil
- 48: Grundteil
- 50: Abdichtungseinheit
- 52: Spannring
- 54: Kabeldurchführungsdichteinheit
- 56: Dichtmodul
- 58: Dichtmodulträger
- 60: Radialrichtung
- 62: Ausnehmung
- 64: Seitenfläche
- 66: Seitenfläche
- 68: Sektorgrenzseite
- 70: Außenfläche
- 72: Außenfläche
- 74: Schlitz
- 76: Schlitz
- 78: Scharnier
- 80: Schlitz
- 82: Schlitz
- 84: Scharnier
- 86: Rasteinheit
- 88: Rasthaken
- 90: Rastausnehmung
- 92: Kopplungseinheit
- 94: Verbindungshaken
- 96: Verbindungsausnehmung
- 98: Schlitz
- 100: Haltenut

## Patentansprüche

1. Dichtmodul (10), insbesondere Kabelkontaktierungswitterungsschutzdichtmodul, das dazu vorgesehen ist, mehrere längliche Körper (12), insbesondere mehrere Kabel (42), zumindest teilweise aufzunehmen und zumindest abschnittsweise zumindest im Wesentlichen komplett in Umfangsrichtung (14) zu umschließen, mit einer Dichtmoduleinheit (16), die zumindest acht Aufnahmebereiche (18) umfasst, die dazu vorgesehen sind, jeweils zumindest einen der länglichen Körper (12) aufzunehmen und die in zumindest zwei reihenförmig angeordneten Gruppen (20, 22) mit jeweils zumindest vier der zumindest acht Aufnahmebereiche (18) angeordnet sind, wobei die Dichtmoduleinheit (16) zumindest zwei Schalungselemente (32, 34) und zumindest ein Dichtungselement (36, 38) umfasst, **dadurch gekennzeichnet, dass** das zumindest eine Dichtungselement (34, 36) elastisch verformbar und zumindest teilweise entlang zumindest einer der zumindest zwei reihenförmig angeordneten Gruppen (20, 22) aufklappbar ausgebildet ist.

2. Dichtmodul (10) nach Anspruch 1, **dadurch gekennzeichnet, dass** die länglichen Körper (12) in einer Montagerichtung in die Aufnahmebereiche (18) der Dichtmoduleinheit (16) einsetzbar sind, die sich jeweils senkrecht zu einer Längsrichtung (24) der länglichen Körper (12) erstreckt.

3. Dichtmodul (10) nach einem der vorhergehenden Ansprüche, **dadurch gekennzeichnet, dass** die Dichtmoduleinheit (24) zumindest zweiteilig ausgebildet ist und zumindest eine erste Dichteinheit (26) und zumindest eine zweite Dichteinheit (28) umfasst.

4. Dichtmodul (10) nach Anspruch 3, **dadurch gekennzeichnet, dass** die zumindest eine erste Dichteinheit (26) und die zumindest eine zweite Dichteinheit (28) jeweils zumindest eine der zumindest zwei reihenförmig angeordneten Gruppen (20, 22) umfassen.

5. Dichtmodul (10) zumindest nach Anspruch 3, **dadurch gekennzeichnet, dass** die zumindest eine erste Dichteinheit (26) und die zumindest eine zweite Dichteinheit (28) miteinander koppelbar ausgebildet sind.

6. Dichtmodul (10) nach einem der vorhergehenden Ansprüche, **dadurch gekennzeichnet, dass** zumindest eine der zumindest zwei reihenförmig angeordneten Gruppen (20, 22) bogenförmig ausgebildet ist.

7. Dichtmodul (10) nach einem der vorhergehenden Ansprüche, **dadurch gekennzeichnet, dass** die zumindest zwei reihenförmig angeordneten Gruppen (20, 22) zumindest im Wesentlichen parallel zueinander angeordnet sind.

8. Dichtmodul (10) nach einem der vorhergehenden Ansprüche, **dadurch gekennzeichnet, dass** die Dichtmoduleinheit (16) für jeden der zumindest acht Aufnahmebereiche (18) jeweils zumindest ein Halteelement (30) umfasst, das zumindest zu einer formschlüssigen Befestigung jeweils eines der länglichen Körper (12) vorgesehen ist.

9. Dichtmodul (10) zumindest nach den Ansprüchen 1 und 3, **dadurch gekennzeichnet, dass** die zumindest eine erste Dichteinheit (26) und die zumindest eine zweite Dichteinheit (28) jeweils zumindest zwei Schalungselemente (32, 34) und zumindest ein Dichtungselement (36, 38) umfassen.

10. Dichtmodul (10) zumindest nach den Ansprüchen 1 und 3, **dadurch gekennzeichnet, dass** die zumindest eine erste Dichteinheit (26) und/oder die zumindest eine zweite Dichteinheit (28) genau ein einstückig ausgebildetes Dichtungselement (34, 36) umfassen/umfasst, das dazu vorgesehen ist, die länglichen Körper (12) zumindest abschnittsweise zumindest im Wesentlichen komplett in Umfangsrichtung (14) zu umschließen.

11. Dichtmodul (10) zumindest nach Anspruch 1, **dadurch gekennzeichnet, dass** die zumindest zwei Schalungselemente (30, 32) und/oder das zumindest eine Dichtungselement (34, 36) die zumindest acht Aufnahmebereiche (18) zumindest teilweise aufweisen/aufweist.

12. Dichtmodul (10) zumindest nach Anspruch 1, **dadurch gekennzeichnet, dass** zumindest eines der zumindest zwei Schalungselemente (30, 32) und/oder das zumindest eine Dichtungselement (34, 36) aufklappbar ausgebildet sind/ist.

13. Dichtmodul (10) zumindest nach Anspruch 1, **dadurch gekennzeichnet, dass** zumindest eines der zumindest zwei Schalungselemente (30, 32) zumindest teilweise entlang zumindest einer der zumindest zwei reihenförmig angeordneten Gruppen (20, 22) aufklappbar ausgebildet ist.

14. Dichtmodul (10) nach einem der vorhergehenden Ansprüche, **dadurch gekennzeichnet, dass** die zumindest eine Dichtmoduleinheit (16) zumindest teilweise kreisringsektorförmig ausgebildet ist.

15. Kabelkontaktierungswitterungsschutz (40) mit zumindest einem Dichtmodul (10) nach einem der vorhergehenden Ansprüche.

## Claims

1. Sealing module (10), in particular cable contact weather protection sealing module, which is configured to at least partially receive a plurality of longitudinal bodies (12), in particular a plurality of cables (42), and to at least substantially completely encompass them in a circumferential direction (14) at least section-wise, with a sealing module unit (16) comprising at least eight receiving regions (18), which are configured to receive at least one of the longitudinal bodies (12) respectively and which are arranged in at least two groups (20, 22) that are disposed row-wise and each have at least four of the at least eight receiving regions (18), the sealing module unit (16) comprising at least two sheathing elements (32, 34) and at least one sealing element (36, 38), **characterised in that** the at least one sealing element (34, 36) is implemented to be elastically deformable and to be at least partly deployable along at least one of the at least two groups (20, 22) that are disposed row-wise.

2. Sealing module (10) according to claim 1, **characterised in that** the longitudinal bodies (12) are insertable in the receiving regions (18) of the sealing module unit (16) in an assembly direction which respectively extends perpendicularly to a longitudinal direction (24) of the longitudinal bodies (12).

3. Sealing module (10) according to one of the preceding claims, **characterised in that** the sealing module unit (24) is realized in an at least two-part implementation and comprises at least one first sealing unit (26) and at least one second sealing unit (28).

4. Sealing module (10) according to claim 3, **characterised in that** the at least one first sealing unit (26) and the at least one second sealing unit (28) respectively comprise at least one of the at least two groups (20, 22) which are arranged row-wise.

5. Sealing module (10) at least according to claim 3, **characterised in that** the at least one first sealing unit (26) and the at least one second sealing unit (28) are implemented to be couplable with each other.

6. Sealing module (10) according to one of the preceding claims, **characterised in that** at least one of the at least two groups (20, 22) which are arranged row-wise is embodied in an arc shape.

7. Sealing module (10) according to one of the preceding claims, **characterised in that** the at least two groups (20, 22) which are arranged row-wise are disposed at least substantially parallel to one another.

8. Sealing module (10) according to one of the preceding claims, **characterised in that** the sealing module unit (16) comprises for each of the at least eight receiving regions (18) at least one holding element (30) respectively, which is configured at least for a positive-fit fixation of a respective one of the longitudinal bodies (12).

9. Sealing module (10) at least according to claims 1 and 3, **characterised in that** the at least one first sealing unit (26) and the at least one second sealing unit (28) each comprise at least two sheathing elements (32, 34) and at least one sealing element (36, 38).

10. Sealing module (10) at least according to claims 1 and 3, **characterised in that** the at least one first sealing unit (26) and/or the at least one second sealing unit (28) comprise/comprises precisely one sealing element (34, 36) that is embodied in one piece and is configured to at least substantially completely encompass the longitudinal bodies (12) in a circumferential direction (14) at least section-wise.

11. Sealing module (10) at least according to claim 1, **characterised in that** the at least two sheathing elements (30, 32) and/or the at least one sealing element (34, 36) at least partially comprise/comprises the at least eight receiving regions (18).

12. Sealing module (10) at least according to claim 1, **characterised in that** at least one of the at least two sheathing elements (30, 32) and/or the at least one sealing element (34, 36) are/is implemented such as to be deployable.

13. Sealing module (10) at least according to claim 1, **characterised in that** at least one of the at least two sheathing elements (30, 32) are/is implemented such as to be deployable at least partly along at least one of the at least two groups (20, 22) which are arranged row-wise.

14. Sealing module (10) according to one of the preceding claims, **characterised in that** the at least one sealing module unit (16) is embodied at least partly in the shape of an annulus sector.

15. Cable contact weather protection (40) with at least one sealing module (10) according to one of the preceding claims.

## Revendications

1. Module d'étanchéité (10), en particulier module d'étanchéité à protection contre les intempéries d'une mise en contact de câble, configuré pour au moins partiellement recevoir une pluralité de corps longitudinaux (12), en particulier une pluralité de câbles (42), et pour au moins sensiblement complètement entourer lesdits corps longitudinaux (12), respectivement câbles (42), en direction circonférentielle (14) au moins par sections, avec une unité de module d'étanchéité (16) comprenant au moins huit zones de réception (18) respectivement prévues pour recevoir au moins un des corps longitudinaux (12) et disposées en au moins deux groupes (20, 22) qui sont agencés en forme de rangées et chacun desquels contient au moins quatre des au moins huit zones de réception (18), où l'unité de module d'étanchéité (16) comporte au moins deux éléments de revêtement (32, 34) et au moins un élément d'étanchéité (36, 38),
**caractérisé en ce que** l'au moins un élément d'étanchéité (34, 36) est réalisé à être élastiquement déformable et au moins partiellement déployable le long de l'au moins un des au moins deux groupes (20, 22) disposés en forme de rangées.

2. Module d'étanchéité (10) selon la revendication 1,
**caractérisé en ce que** les corps longitudinaux (12) peuvent être insérés dans les zones de réception (18) de l'unité de module d'étanchéité (16) dans une direction d'assemblage qui s'étend respectivement perpendiculairement à une direction longitudinale (24) des corps longitudinaux (12).

3. Module d'étanchéité (10) selon l'une quelconque des revendications précédentes,
**caractérisé en ce que** l'unité de module d'étanchéité (24) est implémentée en au moins deux parties et comporte au moins une première unité d'étanchéité (26) et au moins une deuxième unité d'étanchéité (28).

4. Module d'étanchéité (10) selon la revendication 3,
**caractérisé en ce que** l'au moins une première unité d'étanchéité (26) et l'au moins une deuxième unité d'étanchéité (28) chacune comprennent au moins un des au moins deux groupes (20, 22) agencés en forme de rangées.

5. Module d'étanchéité (10) au moins selon la revendication 3,
**caractérisé en ce que** l'au moins une première unité d'étanchéité (26) et l'au moins une deuxième unité d'étanchéité (28) sont réalisées de telle manière qu'elles puissent être couplées l'une avec l'autre.

6. Module d'étanchéité (10) selon l'une quelconque des revendications précédentes,
**caractérisé en ce qu'**au moins l'un des au moins deux groupes (20, 22) agencés en forme de rangées est réalisé en forme d'un arc.

7. Module d'étanchéité (10) selon l'une quelconque des revendications précédentes,
**caractérisé en ce que** les au moins deux groupes (20, 22) agencés en forme de rangées sont disposés au moins sensiblement en parallèle l'un à l'autre.

8. Module d'étanchéité (10) selon l'une quelconque des revendications précédentes,
**caractérisé en ce que** l'unité de module d'étanchéité (16) comprend pour chacune des au moins huit zones de réception (18) respectivement un élément de retenue (30) prévu au moins pour une fixation par liaison en forme de l'un des corps longitudinaux (12) respectivement.

9. Module d'étanchéité (10) au moins selon les revendications 1 et 3,
**caractérisé en ce que** chacune de l'au moins une première unité d'étanchéité (26) et l'au moins une deuxième unité d'étanchéité (28) comporte au moins deux éléments de revêtement (32, 34) et au moins un élément d'étanchéité (36, 38).

10. Module d'étanchéité (10) au moins selon les revendications 1 et 3,
**caractérisé en ce que** l'au moins une première unité d'étanchéité (26) et/ou l'au moins une deuxième unité d'étanchéité (28) comportent/comporte précisément un élément d'étanchéité (34, 36) qui est réalisé d'une pièce et configuré pour au moins sensiblement complètement entourer les corps longitudinaux (12) en direction circonférentielle (14) au moins par sections.

11. Module d'étanchéité (10) au moins selon la revendication 1,
**caractérisé en ce que** les au moins deux éléments de revêtement (30, 32) et/ou l'au moins un élément d'étanchéité (34, 36) comprennent/comprend les au moins huit zones de réception (18) au moins partiellement.

12. Module d'étanchéité (10) au moins selon la revendication 1,
**caractérisé en ce qu'**au moins l'un des au moins deux éléments de revêtement (30, 32) et/ou l'au moins un élément d'étanchéité (34, 36) sont/est réalisé(s) à être au moins partiellement déployable(s).

13. Module d'étanchéité (10) au moins selon la revendication 1,
**caractérisé en ce qu'**au moins l'un des au moins deux éléments de revêtement (30, 32) est réalisé à être déployable le long de l'au moins un des au moins deux groupes (20, 22) agencés en forme de rangées.

14. Module d'étanchéité (10) selon l'une quelconque des revendications précédentes,
**caractérisé en ce que** l'au moins une unité de module d'étanchéité (16) est réalisée au moins partiellement en forme de secteur d'anneau circulaire.

15. Protection contre les intempéries d'une mise en contact de câble (40) avec un module d'étanchéité (10) selon l'une quelconque des revendications précédentes.
